(19) Europäisches Patentamt

European Patent Office

Office européen des brevets

(11) Veröffentlichungsnummer: **0 312 820 B1**

(12) **EUROPÄISCHE PATENTSCHRIFT**

(45) Veröffentlichungstag der Patentschrift:
**22.05.91 Patentblatt 91/21**

(21) Anmeldenummer: **88116197.0**

(22) Anmeldetag: **30.09.88**

(51) Int. Cl.⁵: **B23Q 11/08, F16C 29/08, F16P 3/02**

(54) **Werkzeugmaschine.**

(30) Priorität: **14.10.87 DE 3734716**

(43) Veröffentlichungstag der Anmeldung:
**26.04.89 Patentblatt 89/17**

(45) Bekanntmachung des Hinweises auf die
Patenterteilung:
**22.05.91 Patentblatt 91/21**

(84) Benannte Vertragsstaaten:
**CH DE ES FR GB IT LI SE**

(56) Entgegenhaltungen:
**EP-A- 0 077 456**
**DE-A- 3 416 429**
**DE-U- 8 201 641**
**FR-A- 2 530 521**

(73) Patentinhaber: **Chiron-Werke GmbH & Co. KG**
**Talstrasse 33**
**W-7200 Tuttlingen (DE)**

(72) Erfinder: **Winkler, Hans-Henning, Dr.**
**Brunnentalstrasse 88**
**W-7200 Tuttlingen (DE)**
Erfinder: **Rütschle, Eugen**
**Schönenbergstrasse 20**
**W-7202 Mühlheim (DE)**

(74) Vertreter: **Witte, Alexander, Dr.-Ing.**
**Witte, Weller & Hilgenfeldt Patent- und**
**Rechtsanwälte Augustenstrasse 7**
**W-7000 Stuttgart 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Werkzeugmaschine mit einem in mindestens einer Koordinatenrichtung relativ zu einem Spindelstock verfahrbaren Werkstücktisch, wobei Längsantriebsmittel unterhalb des Werkstücktischs angeordnet und zu beiden Seiten des Werkstücktischs mittels einer Abdeckung überdeckt sind, die teleskopartig übereinanderschiebbare Elemente aufweist, von denen die an eine Seitenwand einer die Abdeckung umgebenden Wanne angrenzenden kleinsten Elemente raumfest angeordnet sind und einen Durchgang nach unten zu der Wanne freigeben.

Eine derartige Werkzeugmaschine ist aus der DE-A-34 16 429 bekannt.

Es ist bekannt, bei Werkzeugmaschinen, insbesondere bei Bearbeitungszentren, die zum Bohren und Fräsen von Werkstücken eingesetzt werden, sogenannte Langbett-Versionen zu realisieren. Bei diesen Langbett-Versionen ist ein Werkstücktisch über eine relativ große Länge verfahrbar, beispielsweise mittels einer Spindel, eines Zahnstangen-Ritzel-Antriebes oder eines Zahnriemens mit Zahnrad, wie dies z.B. in der DE-A-29 10 373 beschrieben ist.

Um die Längsantriebsmittel vor den bei der Bearbeitung herumfliegenden Materialspänen und auch vor dem Bohröl zu schützen, ist zu beiden Seiten des verfahrbaren Werkstücktischs die teleskopartige Abdeckung vorgesehen. Das jeweils größte der teleskopartigen Elemente ist fest mit dem Werkstücktisch verbunden, und das jeweils kleinste Element ist seitlich in der Nähe der senkrecht zur Längsachse des Langbetts verlaufenden Seitenwand angeordnet und befestigt. Die übrigen teleskopartigen Elemente werden beim Verfahren des Werkstücktischs gegeneinander verschoben, wobei zwischen den Elementen wirkende Längsanschläge sicherstellen, daß stets eine Überdeckung der Längsantriebsmittel gewährleistet ist.

Die Elemente der Abdeckung sind im allgemeinen als U-förmig gebogene Bleche ausgebildet, deren Oberseite zudem nach Art eines Pultdachs ausgebildet sein kann. An den Innenseiten sind die Elemente mit U-förmig umlaufenden Lippendichtungen versehen, damit beim Übereinanderschieben der Elemente die Materialspäne und das Bohröl des jeweils nächst kleineren Elementes in Fahrtrichtung abgestreift wird und nicht in den Raum zwischen den Elementen und damit auf die Längsantriebsmittel gelangen kann.

Da man allgemein bestrebt ist, bei Werkzeugmaschinen in Anbetracht der begrenzten Werkstattflächen die Konstruktion so kompakt wie möglich zu gestalten, kann es vorkommen, daß das jeweils kleinste Element der Abdeckung sich in unmittelbarer Nähe der quer verlaufenden Seitenwand befindet. Dies bedeutet, daß beim Erreichen einer Endstellung des Werkstücktischs in größtmöglicher Nähe zur Seitenwand die Elemente vollkommen zusammengeschoben sind und sich die nach außen weisenden Ränder der Elemente ebenfalls in unmittelbarer Nähe der Seitenwand befinden.

Andererseits nehmen bei modernen Bearbeitungszentren die Zerspanungsleistungen immer mehr zu, so daß mit sehr großen Mengen von Spänen gerechnet werden muß, die teilweise auf der Oberseite der Abdeckung liegen bleiben

Wird in einem solchen Betriebszustand der Werkstücktisch in eine Extremlage an der Seitenwand verfahren, so kann der Fall eintreten, daß die Elemente der Abdeckung eine grobe Menge von Spänen vor sich herschieben und in Anbetracht der baulichen Enge in der Nähe der Seitenwand diese Späne zu einem Knäuel zusammengedrückt werden, wenn der Werkstücktisch seine Extremlage erreicht.

Dies hat jedoch den Nachteil, daß die Lippendichtungen beschädigt werden können, wenn beim Zusammendrücken der Späne Spanenden in die Nahtstellen zwischen den Elementen der Abdeckung eingedrückt werden.

Aus der den Ausgangspunkt der erfindungsgemäßen Lehre bildenden DE-A-34 16 429 ist eine spanabhebende Werkzeugmaschine mit einer Abdeckung für mindestens zwei zueinander parallele Führungsbahnen eines Schlittens der spanabhebenden Werkzeugmaschine bekannt. Bei der bekannten Werkzeugmaschine ist ein Spindelstock mit horizontal verlaufender Spindelachse auf dem Schlitten angeordnet. In Verlängerung der Führungsbahnen ist seitlich neben den Führungsbahnen ein raumfester Werkstücktisch angeordnet, auf dem sich das zu bearbeitende Werkstück befindet. Der Spindelstock fährt also entlang den Führungsbahnen bis an ein seitliches Ende der Führungsbahnen heran, um dann von der Seite her das Werkstück zu bearbeiten. Die beim Bearbeiten anfallenden Späne fallen somit nach unten auf den während der Bearbeitung im wesentlichen feststehenden Spindelstock. Zur Überdeckung der Führungsbahnen sind Abdeckelemente vorgesehen, die teleskopartig übereinander verschiebbar sind. Die Abdeckelemente sind als Abdeckkästen ausgebildet, die jeweils eine der Führungsbahnen überdecken. Der Zwischenraum zwischen den Abdeckkästen ist in dem an den Spindelstock angrenzenden Bereich mittels vorzugsweise muldenförmiger Verbindungsbleche abgedeckt. Lediglich die beiden Abdeckkästen, die an die Seiten wand anstoßen, die dem Werkstücktisch benachbart ist, verfügen über keine derartigen Abdeckbleche, so daß zwischen den Abdeckkästen der Zwischenraum frei bleibt. Der freie Zwischenraum entspricht dabei dem Oberflächenbereich, in dem Späne beim Bearbeiten nach unten fallen.

Die bekannte Werkzeugmaschine hat damit den Nachteil, daß sich insbesondere am Ende der Abdeckungen Späne eindrücken und so die Spanabfuhr behindern. Um diese Gefahr zu verringern ist zwar bei der bekannten Werkzeugmaschine vorgesehen, die ohne mittleres Verbindungsblech versehenen einzelnen Abdeckkästen in Längsrichtung der Führungsbahnen derart auszubilden, daß diese einzelnen Kästen nicht vollkommen ineinander geschoben werden können. Dies bringt jedoch den weiteren Nachteil mit sich, daß der Spindelstock nicht ganz an den Werkstücktisch herangefahren werden kann.

Der Erfindung liegt daher die Aufgabe zugrunde, die Werkzeugmaschine der eingangs genannten Art dahingehend weiterzubilden, daß über die gesamte Breite der Abdeckung eine sichere Spanabfuhr – ohne Knäuelbildung und damit ohne Beschädigung der Dichtungen – bei einfacher Konstruktion der Abdeckung gewährleistet ist.

Diese Aufgabe wird erfindungsgemäß dadurch gelöst, daß jeweils ein kleinstes Element zu beiden Seiten des Werkstücktisches an die Seitenwand angrenzt und an seiner Oberseite an einem der Seitenwand zu weisenden Rand mit mindestens einer Öffnung versehen ist und daß die Öffnung auf der den übrigen Elementen zu weisenden Seite mit einem zur Koordinatenrichtung schräg geneigten Rand versehen ist.

Die der Erfindung zugrundeliegende Aufgabe wird auf diese Weise vollkommen gelöst, da kurz vor Erreichen der Endstellung der die Führungsbahnen überdeckenden Elemente die Späne in den Bereich der Öffnung geschoben werden, die in die Oberseite der raumfesten Abdeckelemente integriert ist. Durch die weitere Maßnahme, daß nämlich die Öffnung auf der den übrigen Elementen zu weisenden Seite mit einem zur Koordinatenrichtung schräg geneigten Rand versehen ist, ist in vorteilhafter Weise dadurch erreicht worden, daß die Lippendichtung des jeweils zweitkleinsten Elementes die Späne über einen schrägen Rand in die Öffnung schiebt, so daß stoßartige Belastungen und Entlastungen dieser Lippendichtung vermieden werden. Folglich ist eine sichere Spanabfuhr über die ganze Breite der Abdeckung gewährleistet.

Bei einer bevorzugten Ausgestaltung der Erfindung ist das eine Element mit zwei, im wesentlichen symmetrisch zur Koordinatenrichtung angeordneten Öffnungen versehen, die durch einen Steg voneinander getrennt sind.

Diese Maßnahme hat den Vorteil, daß die Stabilität der Abdeckung nicht oder nur unwesentlich durch die Öffnungen geschwächt wird.

Bei einer bevorzugten Variante dieses Ausführungsbeispiels verläuft der Steg schräg geneigt zur Koordinatenrichtung, wobei der Schrägversatz größer ist als die Breite des Steges.

Diese Maßnahme hat den Vorteil, daß auch bei Vorsehen eines Steges sich keine "tote Zone" bildet, in der, in Verfahrrichtung des Werkstücktisches gesehen, eine Knäuelbildung der Späne auftreten kann, weil bei der genannten schrägen Anordnung des Steges die Lippendichtung des jeweils zweitkleinsten Elements der Abdeckung schräg an den Rändern des Steges vorbeiläuft und die gesamte Oberfläche des Steges überstreicht.

Schließlich ist noch eine Ausführungsform der Erfindung bevorzugt, bei der die Öffnungen im wesentlichen auf je einer Seite des pultdachartig ausgebildeten einen Elements angeordnet sind.

Diese Maßnahme hat den an sich bekannten Vorteil, daß durch die pultdachartige Ausbildung der Elemente der Abdeckung bereits ein gewisser Ablaufeffekt zu den Seiten hin erreicht wird, so daß nur noch ein Anteil der auf die Abdeckung fallenden Späne beim Verfahren des Werkstücktischs durch die Lippen in Verfahrrichtung abgestreift werden muß.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine perspektivische Seitenansicht einer erfindungsgemäß ausgebildeten Werkzeugmaschine;

Fig. 2 eine Draufsicht auf die teleskopartige Abdeckung der Werkzeugmaschine gemäß Fig. 1;

Fig. 3 in vergrößertem Maßstab eine Seitenansicht, geschnitten, durch einen Endbereich der teleskopartigen Abdeckung;

Fig. 4 eine Draufsicht, ebenfalls in vergrößertem Maßstab, auf ein weiteres Ausführungsbeispiel einer Abdeckung einer erfindungsgemäßen Werkzeugmaschine.

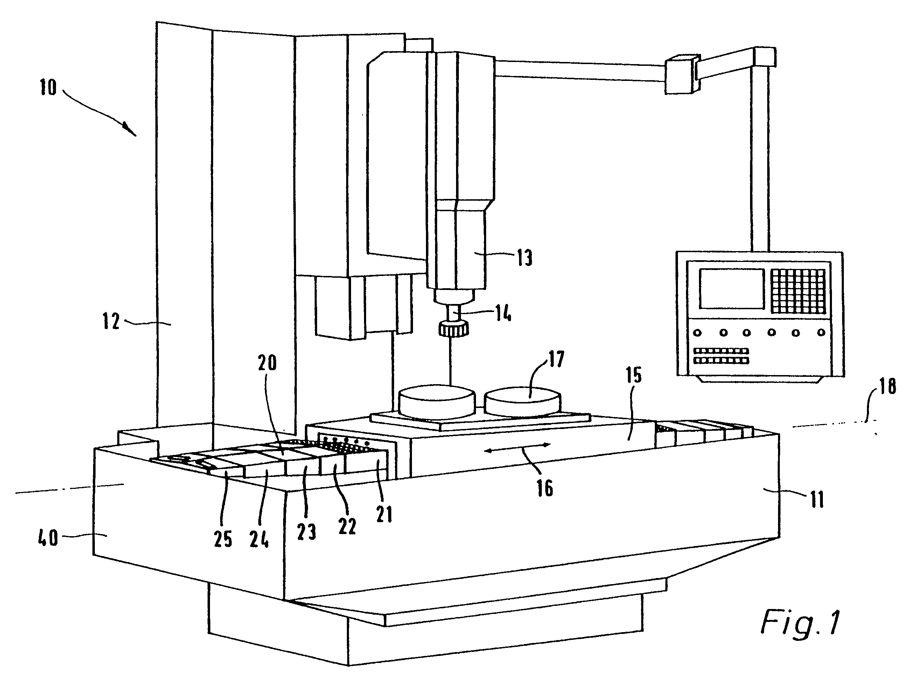

In Fig. 1 bezeichnet 10 insgesamt eine Werkzeugmaschine, nämlich ein Bearbeitungszentrum zum Bohren und Fräsen von Werkstücken in Langbettbauweise.

Die Werkzeugmaschine 10 umfaßt ein langgestrecktes Maschinenbett 11 sowie einen hinter dem Maschinenbett 11 angeordneten Spindelstock 12, der seinerseits eine Spindel 13 trägt. In die Spindel 13 ist ein Werkzeug 14 eingespannt. Ein Werkstücktisch 15 ist in Richtung eines Pfeils 16 relativ zum Maschinenbett 11 verfahrbar. Auf dem Werkstücktisch 15 sind Werkstücke 17 angeordnet, die in der genannten Weise in Richtung einer Längsachse 18, der sogenannten x-Achse, relativ zum Werkzeug 14 verfahrbar sind.

Die Einzelheiten der Verfahrmechanismen, der Steuerung sowie weiterer Verfahrmöglichkeiten in anderen Koordinatenrichtungen sind an sich bekannt und brauchen daher im Rahmen der vorliegenden Erfindung nicht näher erläutert zu werden.

Auf beiden Seiten des Werkstücktischs 15 ist eine unterhalb des Werkstücktischs 15 angeordnete Lineareinheit zum Verfahren des Werkstücktischs 15 mittels einer Abdeckung 20 nach oben abgedeckt. Die Abdeckung 20 besteht aus teleskopartig übereinanderschiebbaren Elementen 21 bis 25, die im wesentlichen als U-gebogene Blechteile ausgebildet sind.

Das dem Werkstücktisch 15 unmittelbar benachbarte Element 21 ist mit diesem fest verbunden. Ebenso ist das jeweils kleinste Element 25 mit einer Seitenwand 40 verbunden, die sich senkrecht zur x-Achse 18 erstreckt.

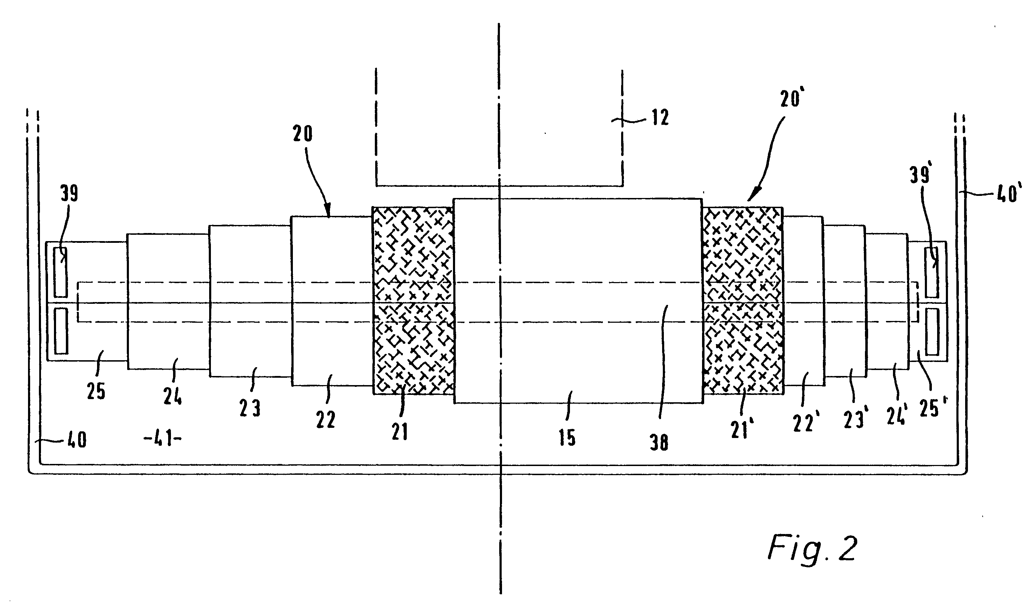

Aus der Draufsicht der Fig. 2 wird erkennbar, daß sich unterhalb des Werkstücktischs 15 die genannte Lineareinheit befindet, beispielsweise eine Zahnstange 38, eine Spindel, ein Zahnriemen o. dgl.

An den Rändern des jeweils kleinsten Elements 25 bzw. 25', das sich in unmittelbarer Nachbarschaft zur Seitenwand 40 bzw. 40' befindet, sind Öffnungen 39 bzw. 39' in der Oberseite des jeweiligen Elements 25 bzw. 25' vorgesehen. Bei einer pultdachartigen Ausbildung der Elemente 21 bis 25 bzw. 21' bis 25' können diese Öffnungen 39 bzw. 39' jeweils paarweise symmetrisch zur x-Achse 18 angeordnet sein.

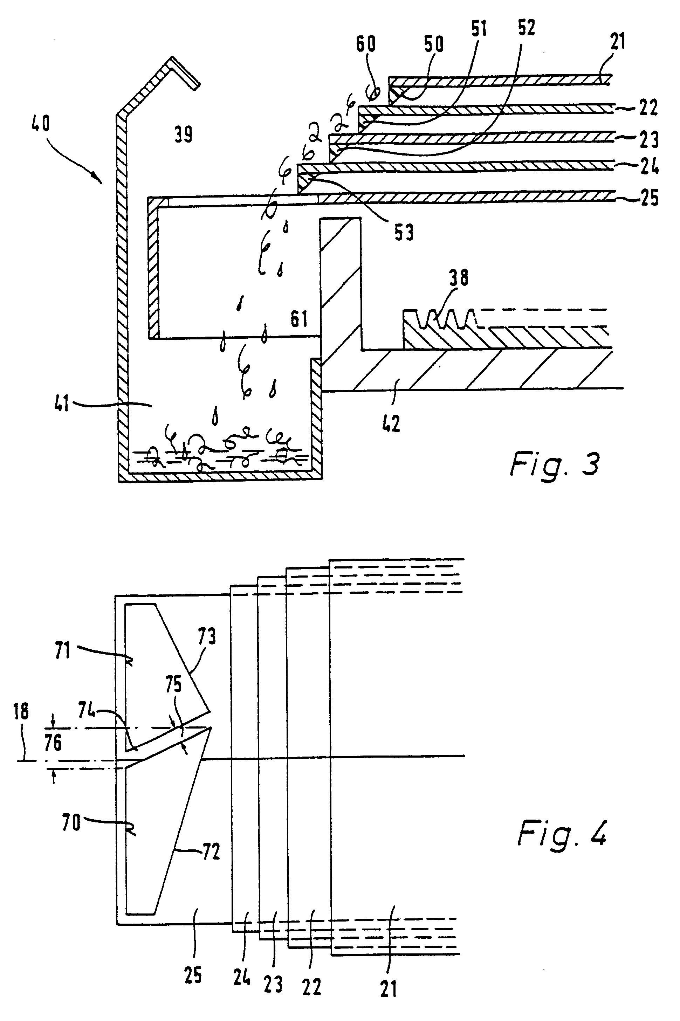

Die Wirkungsweise der Öffnungen 39 wird aus der Seitenansicht der Fig. 3 deutlich.

Wie dort erkennbar ist, geht die Seitenwand 40 an ihrer Unterseite in eine Wanne 41 über, die, wie Fig. 2 auch zeigt, den Werkstücktisch 15 mit der Abdeckung 20 bzw. 20' allseitig umgeben kann.

Die Wanne 41 kann an einen Träger 42 angrenzen, der seinerseits die Zahnstange 38 trägt.

Die beweglichen Elemente 21 bis 24 der Abdeckung 20 sind an ihrem vom Werkstücktisch 15 weg weisenden Rand jeweils mit einer U-förmig umlaufenden Lippendichtung 50 bis 53 versehen. Wie man aus Fig. 3 deutlich erkennen kann, bewirken diese Lippendichtungen 50 bis 53, daß Späne 60 und Bohröl 61 beim Verfahren des Werkstucktischs 15 mit den Elementen 21 bis 24 auf dem jeweils nächst kleineren Element 22 bis 25 in Verfahrrichtung abgestreift werden, sofern sie nicht bereits vorher seitlich von den Elementen 21 bis 25 in die Wanne 41 gelangt sind.

Fig. 3 zeigt den Zustand, in dem die verfahrbaren Elemente 21 bis 24 kurz vor Erreichen der linken Endstellung angekommen sind. Die Lippendichtung 53 des zweitkleinsten Elements 24 hat bereits den Bereich der Öffnung 39 erreicht, so daß die von den Lippendichtungen 50 bis 53 abgestreiften Späne 60 mit Bohröl 61 durch die Öffnung 39 nach unten in die Wanne 41 fallen können. Eine Knäuelbildung der Späne 60 im Bereich vor den Seitenwänden 40 wird auf diese Weise vermieden.

Fig. 4 zeigt noch eine Ausbildungsform von Öffnungen 70, 71, die so gewählt ist, daß weder stoßartige Belastungen der Dichtungen, insbesondere der Dichtung 53 des zweitkleinsten Elements 24, auftreten, noch "tote Zonen" auftreten können, in denen Späne gegen die Seitenwand 40 gedrückt werden.

Hierzu sind die Öffnungen 70, 71 zunächst an ihren den verfahrbaren Elementen 21 bis 24 zu weisenden Seiten mit schräg verlaufenden Rändern 72, 73 versehen. Diese Anordnung der Ränder 72, 73 bewirkt, daß die Dichtung 53 des zweitkleinsten Elements 24 "ziehend" über diese Ränder 72, 73 gleitet und dabei die abgestreiften Späne 60 nach und nach in die Öffnungen 70, 71 fallen. Eine stoßweise Be- oder Entlastung der Dichtung 53 beim Auffahren auf die Öffnungen 70, 71 bzw. beim Zurückfahren wird auf diese Weise vermieden.

Wenn es aus Gründen der Stabilität der Abdeckung 20 wünschenswert ist, zwei Öffnungen 39 oder 70, 71 vorzusehen, die im wesentlichen symmetrisch zur x-Achse 18 angeordnet sind, so kann bei der Anordnung der Fig. 2 der Fall eintreten, daß im Bereich des Steges zwischen den Öffnungen 39, der sich in Richtung der x-Achse 18 erstreckt, zumindest eine gewisse Restmenge von Spänen 60 zusammengedrückt wird, die nicht in den Bereich der Öffnungen 39 gelangt.

Um dies zu vermeiden, ist bei der Anordnung der Fig. 4 ein Steg 74 ebenfalls zur x-Achse 18 geneigt angeordnet. Die Breite 75 des Steges 74 ist in diesem Falle so gewählt, daß sie kleiner ist als der Schrägversatz 76, so daß beim Auffahren der Dichtung 53 des zweitkleinsten Elements 24 alle Späne 60, die zunächst auf den Steg 74 aufgeschoben wurden, bei weiterem Verfahren des Elements 24 in die Öffnung 71 gefördert werden.

## Ansprüche

1. Werkzeugmaschine mit einem in mindestens einer Koordinatenrichtung (18) relativ zu einem Spindelstock (12) verfahrbaren Werkstücktisch (15), wobei Längsantriebsmittel (38) unterhalb des Werkstücktischs (15) angeordnet und zu beiden Seiten des Werkstücktischs (15) mittels einer Abdeckung (20) überdeckt sind, die teleskopartig übereinanderschiebbare Elemente (21 bis 25) aufweist, von denen die an eine Seitenwand (40) einer die Abdeckung (20) umgebenden Wanne (41) angrenzenden kleinsten Elemente (25) raumfest angeordnet sind und einen Durchgang nach unten zu der Wanne (41) freigeben, dadurch gekennzeichnet, daß jeweils ein kleinstes Element (25) zu beiden Seiten des Werkstücktisches (15) an die Seitenwand (40) angrenzt und an seiner Oberseite an einem der Seitenwand (40) zu weisenden Rand mit mindestens einer Öffnung (39 ; 70, 71) versehen ist und daß die Öffnung (39 ; 70, 71) auf der den übrigen Elementen (21 bis 24) zu weisenden Seite mit einem zur Koordinatenrichtung (18) schräg geneigten Rand (72, 73) versehen ist.

2. Werzeugmaschine nach Anspruch 1, dadurch gekennzeichnet, daß das eine Element (25) mit zwei im wesentlichen symmetrisch zur Koordinatenrichtung (18) angeordneten Öffnungen (39 ; 70, 71) versehen ist, die durch einen Steg (74) voneinander getrennt sind.

3. Werkzeugmaschine nach Anspruch 2, dadurch gekennzeichnet, daß der Steg (74) schräg geneigt zur Koordinatenrichtung (18) verläuft, wobei der Schrägversatz (76) gröber ist als die Breite (75) des Steges (74).

4. Werkzeugmaschine nach Anspruch 2 oder 3, dadurch gekennzeichnet, daß die Öffnungen (39 ; 70, 71) im wesentlichen auf je einer Seite des pultdachartig ausgebildeten einen Elements (25) angeordnet sind.

## Claims

1. A machine tool having a workpiece table (15) and a spindle stock (12) being displaceable relative to each other along at least one coordinate direction (18), longitudinal drive means (38) being arranged beneath the workpiece table (15) and being covered on both sides of the workpiece table (15) by means of a cover (20) having elements (21 through 25) being telescopically slideable over each other, the smallest elements (25) adjoining a side wall (40) of a pan (41) surrounding the cover (20) being stationary and providing a downward passage to the pan (41), characterized in that each one smallest element (25) adjoins the side wall (40) on both sides of the workpiece table (15) and is provided with at least one opening (39 ; 70, 71) on its upper side at an edge facing the side wall (40), and that the opening (39 ; 70, 71), on that side facing the other elements (21 through 24), is provided with an edge (72, 73) being inclined with respect to the coordinate direction (18).

2. The machine tool of claim 1, characterized in that the one element (25) is provided with two openings (39 ; 70, 71) being arranged essentially symmetrically with respect to the coordinate direction (18), and being separated with respect to each other by means of a bridge (74).

3. The machine tool of claim 2, characterized in that the bridge (74) extends inclinedly with respect to the coordinate direction, the inclined offset (76) being larger than the width (75) of the bridge (74).

4. The machine tool of claim 2 or 3, characterized in that the openings (39 ; 70, 71) are arranged essentially on one side each of the element (25) being shaped as a pulpit.

## Revendications

1. Machine-outil dotée d'une table porte-pièce (15) qui peut être déplacée par rapport à une poupée (12) le long d'au moins un axe de coordonnées (18), dans laquelle des dispositifs d'entraînement longitudinal (38) situés au-dessous de la table porte-pièce (15) sont recouverts de chaque côté de la table porte-pièce (15) au moyen d'une protection (20), composée de plusieurs éléments télescopiques (21 à 25), dont les plus petits éléments (25), qui sont adjacents à une paroi latérale (40) du carter (41) entourant la protection (20), sont montés de façon fixe et libèrent un passage vers le bas en direction du carter (41), caractérisée en ce que, de chaque côté de la table porte-pièce (15), le plus petit élément (25) est adjacent à la paroi latérale (40) et présente au moins un orifice sur sa face supérieure, sur un bord orienté vers la paroi latérale (40), et en ce que l'orifice (39 ; 70, 71) situé sur le côté orienté vers les autres éléments (21 à 24) présente un bord oblique (72, 73) par rapport à l'axe de coordonnées (18).

2. Machine-outil selon la revendication 1, caractérisée en ce que l'un des éléments (25) présente deux orifices (39 ; 70, 71) disposés de façon essentiellement symétrique par rapport à l'axe de coordonnées (18) et séparés par une barrette (74).

3. Machine-outil selon la revendication 2, caractérisée en ce que la barrette (74) est orientée de façon oblique par rapport à l'axe de coordonnées (18), le décalage oblique (76) étant supérieur à la largeur (75) de la barrette (74).

4. Machine-outil selon la revendication 2 ou 3, caractérisée en ce que les orifices (39 ; 70, 71) sont essentiellement ménagés sur chaque côté de l'un des éléments (25) en forme d'appentis.

Fig.1

Fig. 2

EP 0 312 820 B1

*Fig. 3*

*Fig. 4*